Europäisches Patentamt

European Patent Office

Office européen des brevets

(19)

(11) Veröffentlichungsnummer: **0 262 437**
**A2**

(12) **EUROPÄISCHE PATENTANMELDUNG**

(21) Anmeldenummer: 87112822.9

(22) Anmeldetag: 02.09.87

(51) Int. Cl.⁴: **G01S 15/88** , **G01S 7/52** , **G01L 5/22** , **B25J 13/08**

(30) Priorität: 30.09.86 DE 3633268

(43) Veröffentlichungstag der Anmeldung:
06.04.88 Patentblatt 88/14

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2(DE)**

(72) Erfinder: **Mágori, Valentin, Dipl.-Phys.**
**Limburgstrasse 17**
**D-8000 München 90(DE)**

(54) **Ultraschall-Echoprofilsensor als taktiler Sensor.**

(57) Ein Ultraschall-Echoprofilsensor zur Verwendung als taktiler Sensor, mit einem einen Sender (S) und einen Empfänger (E) enthaltenden Ultraschall-Meßkopf (M), der einen mitgeführten Referenzreflektor (R) aufweist, mittels dessen die momentane Schallgeschwindigkeit der Umgebungsluft bestimmbar ist, wodurch die jeweilige Entfernung des taktilen Sensors von einem Sensorobjekt (O) unabhängig von der variablen Schallgeschwindigkeit der Umgebungsluft richtig zu messen ist, weil ein durch den Referenzreflektor (R) verursachtes Referenzecho durch seine bekannte ungefähre Position von Situationsechos unterscheidbar ist. Der Referenzreflektor (R), dessen Abstand zu dem Ultraschall-Empfänger (E) im Regelfall konstant ist, ist derart angeordnet ist, daß sich der Abstand zwischen dem Ultraschall-Empfänger (E) und dem Referenzreflektor (R) bei taktilem Kontakt zwischen einem Sensorkopf (K) und dem Sensorobjekt (O), insbesondere einem Werkstück, auf charakteristische Weise ändert.

FIG 1

## Ultraschall-Echoprofilsensor als taktiler Sensor

Die vorliegende Erfindung betrifft einen Ultraschall-Echoprofilsensor zur Verwendung als taktiler Sensor, mit einem einen Sender und einen Empfänger enthaltenden Ultraschall-Meßkopf, der einen mitgeführten Referenzreflektor aufweist, mittels dessen die momentane Schallgeschwindigkeit der Umgebungsluft bestimmbar ist, wodurch die jeweilige Entfernung des taktilen Sensors von einem Sensorobjekt unabhängig von der variablen Schallgeschwindigkeit der Umgebungsluft richtig zu messen ist, weil ein durch den Referenzreflektor verursachtes Referenzecho durch seine bekannte ungefähre Position von Situationsechos unterscheidbar ist.

Die Ultraschall-Echoprofil-Auswertung erlaubt die Auswertung komplizierter Ultraschall-Empfangssignale. Ein mit dem Ultraschall-Meßkopf mitgeführter Referenzreflektor liefert aus bekannter Entfernung ein Referenzecho, mit dessen Hilfe die momentane Schallgeschwindigkeit der Luft bestimmt werden kann. Damit werden die jeweiligen Entfernungen, von der variablen Schallgeschwindigkeit der Luft unabhängig richtig gemessen. Das Referenzecho ist durch seine bekannte ungefähre Position oder mit ·Hilfe bekannter Methoden von den Echos der Situation zu unterscheiden.

Der vorliegenden Erfindung liegt die Aufgabe zugrunde, einen Ultraschall-Echoprofilsensor als taktilen Sensor zu schaffen, bei dem ein Referenzreflektor, dessen Abstand zu einem Ultraschall-Empfänger im Regelfall konstant ist, derart angeordnet ist, daß sich der Abstand zwischen dem Ultraschall-Empfänger und dem Referenzreflektor bei taktilem Kontakt zwischen einem Sensorkopf und einem Sensorobjekt, insbesondere einem Werkstück, auf charakteristische Weise ändert.

Zur Lösung dieser Aufgabe wird ein Ultraschall-Echoprofilsensor der eingangs genannten Art und gemäß dem Oberbegriff des Patentanspruchs 1 vorgeschlagen, der durch die in dem kennzeichnenden Teil des Patentanspruchs 1 angegebenen Merkmale charakterisiert ist.

Vorteilhafte Weiterbildungen der Erfindung sind durch die in den Unteransprüchen angegebenen Merkmale gekennzeichnet.

Im folgenden wird die vorliegende Erfindung anhand mehrerer Figuren, die Ausführungsbeispiele für die Erfindung betreffen, im einzelnen beschrieben.

Fig. 1 zeigt eine schematische Darstellung des erfindungsgemäßen Ultraschall-Echoprofilsensors als taktiler Sensor für Berührung und Berührungsdruck und des Prinzips der Echoprofilauswertung.

Fig. 2 zeigt eine schematische Darstellung des erfindungsgemäßen Ultraschall-Echoprofilsensors als taktiler Sensor für eine Greifkraft.

Fig. 3 zeigt eine schematische Darstellung des erfindungsgemäßen Ultraschall-Echoprofilsensors als taktiler Drehmoment-bzw. Drehwinkelsensor.

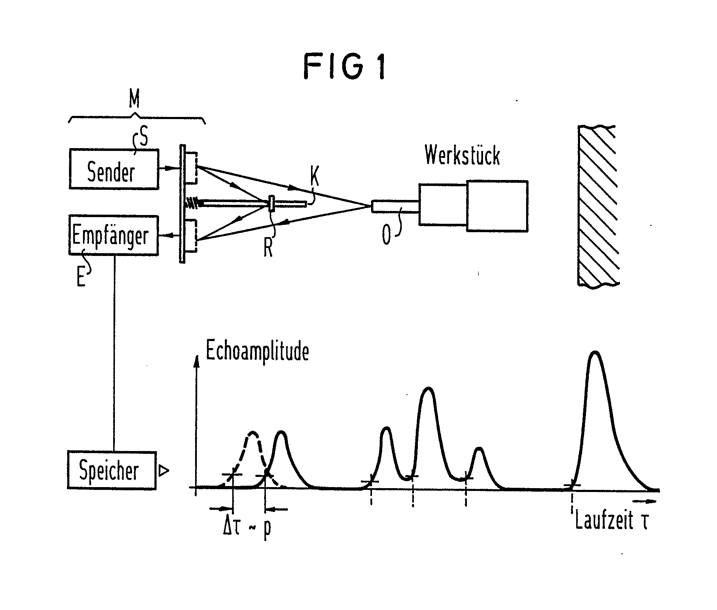

Der vorliegenden Erfindung liegt die Idee zugrunde, den Referenzreflektor R oder einen anderen Reflektor, dessen Abstand zum Ultraschallaufnehmer oder -Empfänger E normalerweise konstant ist, so anzuordnen, daß sich der Abstand zwischen Ultraschallaufnehmer und Reflektor bei taktilem Kontakt zwischen einem Sensorkopf K, beispielsweise einem Greifer oder einem Werkzeug, und dem Sensorobjekt O, bei spielsweise einem Werkstück, auf charakteristische Weise verändert, vergl. Fig. 1. Erfolgt diese Abstandsänderung gegen eine ortsabhängige Kraft, z. B. eine Federkraft, so wirkt die Anordnung als Kraftsensor. Dabei können mit geeigneten Umlenkungen auch solche Kräfte, die nicht in Schallrichtung wirken, erfaßt werden.

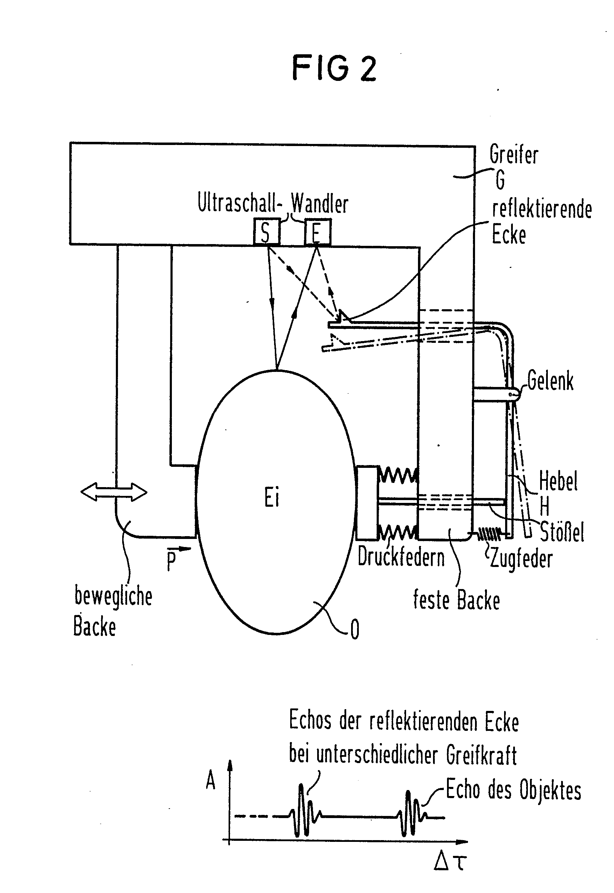

Als Beispiel dafür ist in Fig. 2 ein Greifkraftsensor für eine Roboterhand oder einen Greifer G dargestellt. Bemerkenswert dabei ist, daß gleichzeitig auch der Abstand zum zu greifenden Sensorobjekt O oder Werkstück - im gezeigten Beispiel ein Ei - simultan mitgemessen wird. Für den Fall, daß der Raum zwischen den Greifbacken leer ist, ist die Greifkraft Null, und dementsprechend ist der Greifkraftsensor in der als Referenz (siehe oben) dienenden Ausgangsposition. Mit Umlenkungen, die Drehwinkel bzw. Drehmomente in erfindungsgemäß auswertbare Abstandsänderungen eines Ultraschallreflektors umsetzen, wird durch die Echoprofilauswertung eine Drehwinkel-bzw. Drehmomentmessung ermöglicht.

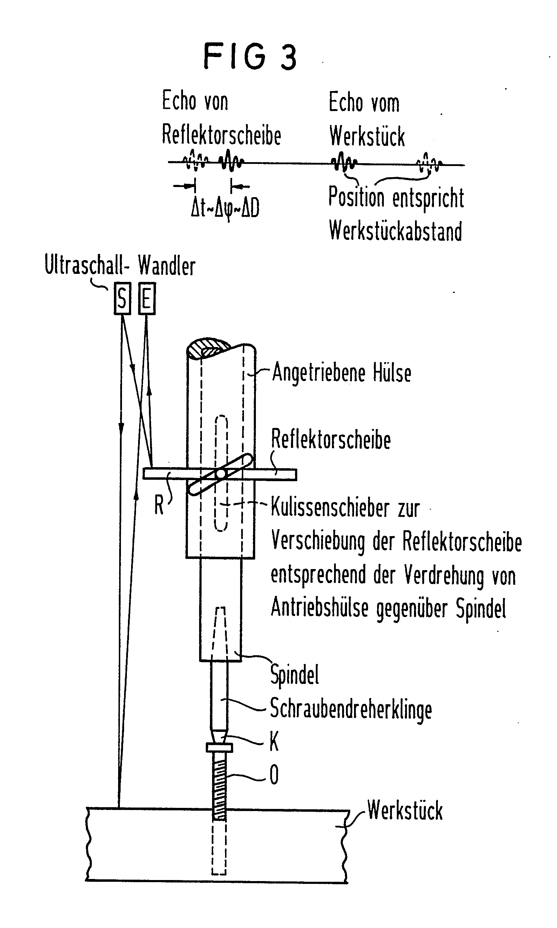

Fig. 3 zeigt als Beispiel dafür eine schematische Darstellung eines berührungslosen Drehmomentgebers für die Spindel einer Bohrmaschine, die in dem gezeigten Beispiel als Schraubendreher benutzt wird, wobei gleichzeitig das Werkstück erfaßt wird.

Wie in den erläuterten Beispielen gezeigt, ist es ein interessanter Teilaspekt der Erfindung, daß ein schon für andere Zwecke eingesetzter Ultraschallsensor ohne großen Aufwand für zusätzliche Meßaufgaben eingesetzt werden kann. Umgekehrt können mit einem erfindungsgemäß ausgeführten taktilen Sensor auch zusätzliche Erkennungs-und Positionierungsaufgaben gelöst werden.

Selbstverständlich schließt die Erfindung auch ein, daß Ultraschall-Differenzsensoren ausschließlich in der be schriebenen Weise als Weg-, Kraft-, Drehwinkel-oder Drehmomentaufnehmer eingesetzt werden.

## Ansprüche

1. Ultraschall-Echoprofilsensor zur Verwendung als taktiler Sensor, mit einem einen Sender und einen Empfänger enthaltenden Ultraschall-Meßkopf, der einen mitgeführten Referenzreflektor aufweist, mittels dessen die momentane Schallgeschwindigkeit der Umgebungsluft bestimmbar ist, wodurch die jeweilige Entfernung des taktilen Sensors von einem Sensorobjekt unabhängig von der variablen Schallgeschwindigkeit der Umgebungsluft richtig zu messen ist, weil ein durch den Referenzreflektor verursachtes Referenzecho durch seine bekannte ungefähre Position von Situationsechos unterscheidbar ist, dadurch **gekennzeichnet,** daß der Referenzreflektor (R), dessen Abstand zu dem Ultraschall-Empfänger (E) im Regelfall konstant ist, derart angeordnet ist, daß sich der Abstand zwischen dem Ultraschall-Empfänger (E) und dem Referenzreflektor (R) bei taktilem Kontakt zwischen einem Sensorkopf (K) und dem Sensorobjekt (O), insbesondere einem Werkstück, auf charakteristische Weise ändert (Fig.1).

2. Ultraschall-Echoprofilsensor nach Anspruch 1, dadurch **gekennzeichnet,** daß eine Anwendung als Kraftsensor vorgesehen ist, wenn die Abständsänderung gegen eine ortsabhängige Kraft erfolgt.

3. Ultraschall-Echoprofilsensor nach Anspruch 2, dadurch **gekennzeichnet,** daß eine Vorrichtung zur . Umlenkung von Kräften vorgesehen ist, die nicht in Schallrichtung wirken.

4. Ultraschall-Echoprofilsensor nach Anspruch 2 oder 3, dadurch **gekennzeichnet,** daß eine Anwendung des Kraftsensors als Greifkraftsensor, vorzugsweise in einer Roboterhand, vorgesehen ist, bei dem eine relative Auslenkung eines Hebels (H) in bezug auf den Ultraschall-Meßkopf (S/E), der in einem Greifer (G) angeordnet und schallmäßig auf das Sensorobjekt (O) ausgerichtet ist, eine Funktion der Greifkraft (P) ist und bei dem der Abstand zu dem zu greifenden Sensorobjekt (O) simultan miterfaßt wird.

# FIG 1

# FIG 2

Greifer G
reflektierende Ecke

Ultraschall- Wandler

S    E

Gelenk

Hebel H

Stößel

Zugfeder

Druckfedern

Ei

feste Backe

bewegliche Backe

$\overrightarrow{P}$

0

Echos der reflektierenden Ecke
bei unterschiedlicher Greifkraft

Echo des Objektes

A

$\Delta\tau$

# FIG 3

Echo von
Reflektorscheibe

Echo vom
Werkstück

$\Delta t \sim \Delta\varphi \sim \Delta D$

Position entspricht
Werkstückabstand

Ultraschall- Wandler

S   E

Angetriebene Hülse

Reflektorscheibe

R

Kulissenschieber zur
Verschiebung der Reflektorscheibe
entsprechend der Verdrehung von
Antriebshülse gegenüber Spindel

Spindel
Schraubendreherklinge
K
0

Werkstück